Europäisches Patentamt

(19) European Patent Office

Office européen des brevets

(11) Publication number : **0 339 216 B1**

## (12) EUROPEAN PATENT SPECIFICATION

(45) Date of publication of patent specification :
**10.06.92 Bulletin 92/24**

(51) Int. Cl.⁵ : **E04B 1/32,** A01G 9/14,
E04D 3/28, E04D 3/366,
E04C 2/54

(21) Application number : **89103901.8**

(22) Date of filing : **06.03.89**

(54) **Translucent self-supporting enclosure for building structures.**

(30) Priority : **28.04.88 IT 2035688**

(43) Date of publication of application :
**02.11.89 Bulletin 89/44**

(45) Publication of the grant of the patent :
**10.06.92 Bulletin 92/24**

(84) Designated Contracting States :
**AT BE CH DE ES FR GB GR IT LI LU NL SE**

(56) References cited :
**EP-A- 0 050 462**
**EP-A- 0 059 965**
**FR-A- 1 209 542**
**FR-A- 2 552 467**

(56) References cited :
**GB-A- 901 935**
**GB-A- 2 061 354**
**GB-A- 2 081 770**
**US-A- 4 003 177**
**US-A- 4 463 534**

(73) Proprietor : **POLYU' ITALIANA S.r.l.**
**Via Rossini, 12**
**I-20010 Arluno (Milano) (IT)**

(72) Inventor : **Celsi, Giovanni**
**Via Riotta 34**
**I-28100 Novara (IT)**

(74) Representative : **Zanella, Ireneo et al**
**de Dominicis & Mayer Piazzale Marengo 6**
**I-20121 Milano (IT)**

EP 0 339 216 B1

Jouve, 18, rue Saint-Denis, 75001 PARIS

## Description

The present invention relates to a translucent self-supporting enclosure for building structures.

The document GB-A-2081770, corresponding to IT-U-182.164 discloses a self-supporting assembly for enclosing building structures and more precisely for realizing vertical and horizontal enclosures in civil and industrial buildings so as to achieve protection against external agents. These enclosures should therefore have, if possible, a high insulation factor. According to GB-A-2081770 the said self-supporting assemblies are formed from a plurality of polycarbonate strip panels consisting of two opposing walls connected by ribs perpendicular to the same and mutually parallel and having lateral flanges converging towards the inside of the respective strip panel, the flanges of two adjacent strip panels being clamped against each other by means of an assembly profile in the form of a metal box-shaped upright with a cross-section substantially in the form of a U, the lateral sides of which have a matching shape with respect to the external shape of the said converging flanges of the profiles and, in the assembled state, clamp the said flanges against each other with elastic preloading.

The panel flanges are rather stiff, so that the insertion thereof into the assembly profiles is rather difficult and time consuming.

GB-A-2061354 discloses a double-wall cellular plate consisting of a two panel walls spaced from each other and a recticulation in between. In order to achieve high thermal insultation properties and a considerable rigidity, the recticulation consists of inclined walls forming a serie of adjacents cells of substantially three sided transversal cross-section. The disclosed cellular plate is flat, has closed peripherals edges and is not provided with coupling ends. The cellular plate can be installed like a glass panel and has a fixed insulating factor.

A limitition of the known strip panels is that they have a relativly low and fixed insulation factor, which for some applictions, as for example greenhouses, or for use in countries with a cold climat is often too low.

A main object of the present invention consists in structuring the known self supporting enclosure in such a way as to obtain, together with a structure which can be easily constructed and a limited use of material, an increasable insulation factor for the enclosure.

Another object of the present invention consists in the possibility of constructing enclosure walls configured, as required, as single-wall or double-wall enclosures.

The above mentioned object, forming the basis of the present invention, as well as others which will emerge below, are achieved in the form of improved self-supporting enclosures of the type indicated, which are characterized in that they have the feature combination described in the characterizing part of Claim 1.

Further structural features will become evident in the characterizing part of Claim 2.

EP-A 0.050.462 discloses light transmitting wall panels. Each panel has joining flanges 12 with tooth-like detent means 16. Two adjacent panels can be conected by application of a joing U-shaped member 21. Inside the wing portons 24 of said joining members 21 are provided detent means 26 engagably matching the detent means 16 of the flange insides.

During the joining of two adjacent panels a joining member 21 is pushed over the flanges 12 as far well as it will go (under slight elastic deformation of the elements involved), while offering resistance to the removal of the joining member 21.

In fact, after joining the panels it is not possible to separate the panels again. This is an important drawback. In fact this solution does not permit a disassembling of the mounted panel wall. Futher, if for example by mounting a panel wall the assembler finds out that panel is out of alignment with respect to the adjacent panel, he has no other choice than to brake the last assembled panel in order to remove the latter.

The greenhouse structure disclosed in US-C-4.463.534 does not consist of single panels with lateral coupling elements, which can be clampled against each other by means of assembling profiles or the like.

The disclosed greenhouse structure consists of spaced parallel rails for supporting glass panels. The I-shaped rails or beams need further separated components for supporting the outer and the inner glass panels.

Numerous advantages are obtained with the improved self-supporting enclosure according to the invention.

Construction of the enclosure in the double-wall version, or subsequent completion of the same, so as to form a double-wall enclosure, is performed simply by applying additional strip panels, forming the additional wall, without the need for further components. Furthermore, the thickness of the additional panels for forming the double wall may be advantageously chosen as required.

Further characteristic features, advantages and details of the improved translucent self-supporting enclosure according to the invention will also emerge more clearly from the following description, with reference to the accompanying drawing, showing in diagrammatic form a preferred embodiment of the improved translucent self-supporting enclosures according to the invention.

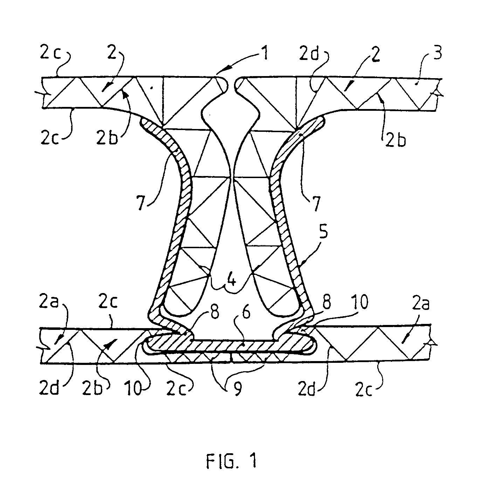

Fig. 1 shows a cross-section through to adjacent strip panels of the enclosure wall according to the invention. A translucent self-supporting enclosure is indicated in its entirety by 1.

The self-supporting enclosure is formed by a plurality of outer strip panels 2 each having a proper wall portion 3 and end flanges 4 constructed so as to converge towards the inside of the said strip panel 2, the flanges 4 of two adjacent panels 2 being clamped together by means of an assembly upright or metal profile 5. The latter has a structure substantially in the shape of a U with a base wall 6 and narrowly converging lateral sides 7, the shape of which is substantially matching with respect to the shape of the said end flanges 4 of the outer panels 2, so as to ensure clamping engagement for preloading with geometric or configurational engagement of the same end flanges. According to the invention, in the bottom part of the assembly profile 5, substantially in the region of the base wall 6, there are provided two longitudinal undercut grooves 8. The same serve to anchor inner strip panels 2a, in order to construct self-supporting double-wall enclosures. For this purposes, said inner strip panels 2 have a flat extension and lowered ends defining an abutment portion 9, as well as a fixing, or hooking, tongue 10 engaging insite an associated undercut groove 8.

From the drawing is inferable that the abutment portions 9 provide, together with the fixing tongue 10 engaging an associated profile groove 8, a "snapping coupling" between the assembly profiles 5 and the inner strip panels 2a. From the drawing is further inferable that the abutment portions 9 abut one another and form a continuous inner wall of the self-supporting enclosure. This is of advantage further for achieving a better insulating factor as well as for a better aesthetic aspect of the enclosure and facilitates the cleaning thereof. The shape and the dimensions of the longitudinal grooves 8, as well as those of the engaging tongues 10, may be freely choosen.

As can be seen in the drawing, the outer strip panels 2, as well as the inner strip panels 2a, have, between their opposing wall 2c, a known internal recticulation 2b with slanting walls 2d.

As may be determined from experimental comparisons, with a recticulation 2b structured in this manner, in the panel flanges 4 the latter become more flexible. Thus the insertion of said panel flanges 4 into the assembly profiles 5 may be carried out in an easier and quicker way.

From the above structural and functional description of the improved self-supporting enclosures according to the invention, it can be seen that the same effectively achieve the objects mentioned and enable the advantages mentioned in the introductory part to be obtained.

It is therefore possible to have walls which offer greater insulation and which may, as required, be constructed with a single wall or a double wall, it being possible for the double wall to be constructed during installation of the wall itself or subsequently. From the drawing it is inferable that the outer and inner panels 2, 2a are spaced apart a in parallel relationship and at a spacing from one another and that after installation of the inner panels the assembly profiles are entirely accomodated between the outer and the inner panels 2, 2a in said spacing or internal chamber. Therefore the inner strip panels 2a conceal the assembly profiles 5.

In practice all the individual parts may be replaced by others technically and/or operationally equivalent, without thereby departing from the protective scope of the present invention. Also, the geometric shape of the various parts which can be joined together may be chosen as required, depending on the particular case in question.

The dimensions and materials, as well as the use of any sealing devices, by their very nature may be freely chosen.

REFERENCE NUMBERS

1 Wall
2 Outer strip panel
2a Inner strip panel
2b Reticulation
2c Opposing walls
2d Slanting wall
3 Wall portion
4 End flange
5 Assembly profile
6 Base wall
7 Lateral sides
8 Longitudinal undercut grooves
9 Abutment portion
10 Engaging tongue

**Claims**

1. Translucent self-supporting enclosure for building structures, comprising a plurality of outer strip panels (2) having a wall portion (3) and end flanges (4) converging towards the inside of the outer panel (2), the outer panels (2) having two opposing walls (2c) with a reticulation (2d) located in between, as well as an U-shaped assembly profile (5) engaging, with geometric engagement and elastic preloading, the opposing end flanges (4) of two adjacent outer strip panels (2), **characterized** in that:

a) the U-shaped assembly profiles (5) are provided at the sides of the base wall (6) with longitudinal undercut grooves (8),

b) the enclosure further comprises a plurality of transluced inner strip panels (2a), each strip panel (2a) having on each longitudinal end a tongue (10) receivable in a respective undercut groove (8), and an abutment portion (9) engaging the base wall (6) of said profile (5), said abutment portions (9) of adjacent inner panels (2a) enganging each other to form a continuous inner wall for
the structure (1),

c) the reticulation (2b) of the end flanges (4) of the
outer strip panels (2) and the reticulation of the
wall portion (3) of the outer strips panels (2) and
of the inner strip panels (2a) is constructed with
slanting walls (2d) inclined in opposite directions

2. Translucent self-supporting enclosure according to claim 1, **characterized** in that the outer and
inner panels (2, 2a) are spaced apart in a mutually
parallel relationship and at a spacing from one
another, and in that the assembly profiles (5) are
entirely accomodated between the outer and inner
panels (2, 2a) in said spacing.

**Patentansprüche**

1. Durchscheinende, selbsttragende Abdeckung
fuer Bauwerke, mit einer Mehrzahl von aeusseren
Plattenstreifen (2), die ein Wandteil (3) und zum Inneren der aeusseren Platte (2) zusammenlaufende Endflansche (4) aufweisen, wobei die aeussere Platte (2)
aus zwei gegenueberliegenden, mit einer dazwi-
schenliegenden Verstrebung (2d) versehenen Plat-
tenwaenden (2c) besteht, mit einem U-foermigen
Montageprofil (5), das die sich gegenueberliegenden
Endflansche (4) zweier nebeneinanderliegender Aussenplatten (2), formschluessig und mit elastischer
Vorspannung umgreift, **dadurch gekennzeichnet**,
dass

a) die U-foermigen Montageprofile (5) an den
Seiten des Wandbodens (6) mit hinterschnittenen
Laengsnuten (8) versehen sind,

b) die Abdeckung ferner eine Mehrzahl von
durchscheinenden, inneren Plattenstreifen (2a)
und jeder innere Plattenstreifen (2a) am Plattenlaengsrand eine in eine hinterschnittene Laengsnut (8) einsetzbare Lasche (10) aufweist, sowie
einen Stoss (9) besitzt, der den Profilboden (6)
des Profils (5) untergreift, wobei die Stossteile (9)
von nebeneinanderliegenden inneren Plattenstreifen (2a) in gegenseitiger Verbindung stehen
und eine durchgehende Innenwand fuer die
Abdeckung (1) bilden,

c) die Verstrebung (2b) der Endflansche (4) der
Aussenplatten (2) und die Verstrebung des Plattenteils (3) der Aussenplatten (2) und der Innenplatten (2a) aus sich in entgegengesetzten
Richtungen erstreckenden geneigten Stegen
(2d) besteht.

2. Durchscheinende, selbsttragende Abdeckung,
nach Anspruch 1, **dadurch gekennzeichnet**, dass
die aeusseren und inneren Platten (2,2a) mit Abstand
und parallel zueinander angeordnet sind, und die
Montageprofile (5) vollstaendig im Raum zwischen
den Aussen- und Innenplatten (2,2a) angeordnet sind.

**Revendications**

1. Enceinte translucide autoporteuse pour bâtiments, comprenant une pluralité de panneaux extérieurs en forme de bande (2) possédant une portion
formant paroi (3) et des brides extrêmes (4) convergeant vers l'intérieur du panneau extérieur (2), les
panneaux extérieurs (2) présentant deux parois opposées (2c) possédant une réticulation (2d) située entre
elles, ainsi qu'un profilé d'assemblage en forme de U
(5) venant en prise, avec engagement géométrique et
précontrainte élastique, dans les brides extrêmes
opposantes (4) de deux panneaux extérieurs en
forme de bande adjacents (2), caractérisée en ce
que :

(a) les profilés d'assemblage en forme de U (5)
sont pourvus, aux côtés de la paroi de bas6e (6)
de rainures longitudinales évidées (8),

(b) l'enceinte comprend, en outre, une pluralité de
panneaux intérieurs en forme de bande translucindes (2a), chaque panneau en forme de bande
(2a) possédant sur une extrémité longitudinale
une languette (10) pouvant être reçue dans une
rainure évidée respective (8), et une portion formant butée (9) venant en prise dans la paroi de
base (6) dudit profilé (5), lesdites portions formant butée (9) de panneaux intérieurs adjacents
(2a) venant en prise les unes dans les autres pour
former une paroi intérieure continue pour la structure (1),

(c) la réticulation (2b) des brides extrêmes (4) des
panneaux extérieurs en forme de bande (2) et, de
préférence, la réticulation de la portion formant
paroi (3) des autres panneaux en forme de bande
(2) et des panneaux intérieurs en forme de bande
(2a) est réalisée avec des parois obliques (2d)
inclinées dans les directions opposées.

2. Enceinte translucide autoporteuse selon la
revendication 1, caractérisée en ce que les panneaux
extérieurs et intérieurs (2, 2a) sont espacés dans une
relation parallèle réciproque et à un espacement l'un
de l'autre, et en ce que les profilés d'assemblage (5)
sont entièrement logés entre les panneaux extérieurs
et intérieurs (2, 2a) dans ledit espacement.

FIG. 1